# EUROPÄISCHE PATENTANMELDUNG

(11) **EP 4 686 732 A1**
(43) Veröffentlichungstag der Anmeldung: **04.02.2026**
(21) Anmeldenummer: 25188225.4
(22) Anmeldetag: 08.07.2025
(51) Int. Cl.: C08J 9/00, C08L 67/02, B29D 7/01, C08K 3/36

(54) **KUNSTSTOFFRECYCLINGPLATTE ZUR VERWENDUNG ALS DACHELEMENT UND/ODER WANDELEMENT UND VERFAHREN ZUM HERSTELLEN EINER KUNSTSTOFFRECYCLINGPLATTE**

(30) Priorität: 01.08.2024 EP 24192398
(71) Anmelder: Salux GmbH, 06526 Sangerhausen (DE)
(72) Erfinder: Schendzielorz, Anja, 06526 Sangerhausen (DE); von Lien, Wolfgang, 27404 Zeven (DE)
(74) Vertreter: Weidner Stern Jeschke

(57) **Zusammenfassung**

Die Erfindung betrifft eine Kunststoffrecyclingplatte zur Verwendung als Dachelement und/oder Wandelement, wobei die Kunststoffrecyclingplatte einen Copolyester aufweist, und die Kunststoffrecyclingplatte als Copolyester mindestens 30,0 Massenprozent, insbesondere mindestens 50,0 Massenprozent, recyceltes, Glykol modifiziertes Polyethylenterephthalat und/oder recyceltes, Glykol-modifiziertes Polycyclohexylendimethylenterephthalat und als Additiv ein Antiblockingmittel mit bis zu 0,5 Massenprozent aufweist. Des Weiteren betrifft die Erfindung ein Verfahren zum Herstellen einer Kunststoffrecyclingplatte. Somit kann eine profilierte Recyclingplatte aus einem Blend recycelter Kunststoffe bereitgestellt werden.

## Beschreibung

Die Erfindung betrifft eine Kunststoffrecyclingplatte zur Verwendung als Dachelement und/oder Wandelement. Des Weiteren betrifft die Erfindung ein Verfahren zum Herstellen einer Kunststoffrecyclingplatte.

Zur Dachabdeckung mit lichtundurchlässigen und/oder opaken Materialien werden neben Dachziegeln, Profilblechen und/oder Faserzementplatten bisher vor allem Bitumenbahnen und/oder Bitumenwellplatten eingesetzt. Des Weiteren werden Profilplatten aus lichtdurchlässigem oder opaken Kunststoff vor allem für Carport- und Scheunendächer verwendet. Dabei kommen vorwiegend Hart-Polyvinylchlorid, Polycarbonat oder Polymethylmethacrylat zur Anwendung, wobei die Polymere jeweils als Hauptkomponente unter Zusatz von Additiven verwendet werden. Dadurch weisen die gefertigten Kunststoffplatten entsprechend ihrer Materialeigenschaften unterschiedliche Dauerhaftigkeiten beim Außeneinsatz auf. Neben der mechanischen Stabilität und der gewünschten Lichtdurchlässigkeit oder Opazität werden an Kunststoffplatten zur Dacheindeckung weitere Anforderungen, wie die Beständigkeit gegen Witterungseinflüsse und **UV-**Strahlung, Brandbeständigkeit, Schneelast, Geräuschstärke bei Niederschlag und/oder Hagelschlag, gestellt. Im Vergleich zu einem Ziegeldach liegen die Vorteile der Kunststoffprodukte vor allem im relativ geringen Flächengewicht und der kostengünstigen und einfachen Verlegung.

Es sind bisher Flachplatten aus sortenreinem, recyceltem Kunststoff, wie ABS (Acrylnitril-Butadien-Styrol-Copolymer), HDPE (High-Density Polyethylen) oder Polystyrol bekannt, welche beispielsweise als Gehäuseteile in Industrieanlagen oder als Wurzelschutzplatten im Garten- und/oder Landschaftsbau eingesetzt werden. Allgemein erhält die Verwendung von Recyclingmaterialien aufgrund von Nachhaltigkeitsaspekten bei Bauprodukten eine zunehmende Bedeutung.

Zudem ist bekannt, dass zur Herstellung von Kunststoffplatten aus glykolmodifiziertem Polyethylenterephthalat (PET-G), ABS, Polymethylmethacrylat (PMMA) oder Polyolefinen üblicherweise Einschneckenextruder genutzt werden. Hierbei ermöglicht ein Einschneckenextruder durch seine meist sehr lange Schnecke günstige Verarbeitungstemperaturen für ein optimales Aufschmelzverhalten, insbesondere bei längerer Verweilzeit, des jeweiligen Kunststoffes.

WO 2023/089152 A1 offenbart einen Rauchabzug, welcher aus einer Dacheindeckungsplatte mit einer wellenförmigen Profilgeometrie aus recyceltem PET-G als einziges Material besteht, wobei dieses Material bei einer Temperatur von ≥ 80 °C weich wird und schrumpft, sodass im Brandfall Rauch durch diese Dacheindeckungsplatte nach außen abziehen kann.

CN 110 256 823 A beschreibt ein glasfaserverstärktes Verbundmaterial, welches 10 bis 30 Gewichtsprozent recycelten ABS-Harz, 20 bis 50 Gewichtsprozent regenerierten Copolymerisationsester, wie PET-G aus Flaschenflocken, 10 bis 40 Gewichtsprozent Glasfaser, 0,5 bis 3,0 Gewichtsprozent Verträglichkeitsvermittler sowie weitere Additive aufweist. Das glasfaserverstärkte Verbundmaterial behält seine Zähigkeit auch bei niedrigen Temperaturen im Außeneinsatz.

US 2022/061589 A1 betrifft einen Pelletgrill mit einem Pelletgrillaufsatz zum Leiten von Pellets aus einem Pelletgrilltrichter in einen Vorratsbehälter, bei welchem der Pelletgrillaufsatz PET-G aufweist.

CN 114 921 066 A offenbart eine geschäumte PET-Verbundplatte, welche 100 Massenteile PET, 10 bis 20 Massenteile Conditioner, 100 bis 200 Massenteile anorganischen Füllstoff, 1 bis 2 Massenteile Schaummittel und 1 bis 4 Massenteile PE-Wachs aufweist. Zur Herstellung der Verbundplatte wird recyceltes PET beispielsweise aus PET-Flaschenflocken eingesetzt und eine Schmelzextrusion in einem Bereich von 200 bis 260 °C, bevorzugt bei 240 °C, durchgeführt.

Aufgabe der Erfindung ist es, den Stand der Technik zu verbessern.

Gelöst wird die Aufgabe durch eine Kunststoffrecyclingplatte zur Verwendung als Dachelement und/oder Wandelement, wobei die Kunststoffrecyclingplatte einen Copolyester aufweist, und die Kunststoffrecyclingplatte als Copolyester mindestens 30,0 Massenprozent, insbesondere mindestens 50,0 Massenprozent, recyceltes, Glykol-modifiziertes Polyethylenterephthalat und/oder recyceltes, Glykol-modifiziertes Polycyclohexylendimethylenterephthalat und als Additiv ein Antiblockingmittel mit bis zu 0,5 Massenprozent aufweist.

Somit wird eine Kunststoffrecyclingplatte bereitgestellt, welche zumindest zu 30,0 % oder zur Hälfte ihrer Masse recyceltes, Glykol-modifiziertes Polyethylenterephthalat (PET-G) und/oder recyceltes, Glykol modifiziertes Polycyclohexylendimethylenterephthalat (PCT-G) und damit mindestens ein Recyclingmaterial aufweist, welches den zunehmenden Anforderungen an die Nachhaltigkeit von Bauprodukten gerecht wird. Dadurch wird ein Dachelement und/oder Wandelement aufweisend zumindest einen recyclierten Kunststoff bereitgestellt, welches zur Neueindeckung oder Sanierung von Dach- und/oder Wandkonstruktionen verwendet werden kann.

Dadurch können die großen, jährlich in der Verpackungsbranche anfallenden Kunststoffabfallmengen aus transparentem PET-G und/oder PCT-G, welche meist aus hygienischen Gründen nicht in einen Verarbeitungsprozess zurückgeführt werden dürfen, wie beispielsweise Blister- und Folienabfälle, als Hauptkomponente zur Fertigung der erfindungsgemäßen, insbesondere lichtdurchlässigen, Kunststoffrecyclingplatte eingesetzt werden.

Beispielsweise kann eine lichtdurchlässige Kunststoffrecyclingplatte 99,6 Prozent PET-G und/oder PCT-G, 0,3 Prozent UV-Stabilisator und 0,1 Prozent Antiblockingmittel aufweisen.

Ein wesentlicher Gedanke der Erfindung beruht darauf, mit mindestens 30,0 Massen-%, insbesondere mindestens 50,0 Massen-%, recyceltem PET-G und/oder recyceltem PCT-G als Hauptkomponente ausschließlich recyceltes Kunststoffmaterial, beispielsweise Sekundärware und/oder Post-Industrial-Material, einzusetzen, um einen wichtigen Beitrag zur Kreislaufwirtschaft und zu einer verbesserten Nachhaltigkeit in der Kunststoffindustrie zu leisten. Gleichzeitig hat die Erfindung das Ziel, den Anforderungen an die geforderten Eigenschaften der Kunststoffrecyclingplatte bei einer Verwendung als Dachelement und/oder Wandelement, wie der jeweils gewünschten Lichtdurchlässigkeit oder Opazität, der mechanischen Stabilität, der Beständigkeit gegen Witterungseinflüsse und/oder UV-Strahlung, den Flammschutzeigenschaften, der Geräuschminderung oder der erforderlichen Flächen- und/oder Schneelast, gerecht zu werden. Zudem ist der Zusatz eines Antiblockingmittels vorteilhaft, um ein Aneinanderhaften der gefertigten Kunststoffrecyclingplatten bei allen verschiedenen Plattenarten zu vermeiden. Vor allem bei der Herstellung von profilierten, transparenten oder opaken Kunststoffrecyclingplatten mit glatter Ober- und Unterseite ist insbesondere ein Zusetzen des Antiblockingmittels bis zu 0,5 % Massen-% vorteilhaft.

Folgendes Begriffliche sei erläutert:
Eine "Kunststoffrecyclingplatte" ist insbesondere ein Bauteil mit einer gleichen Materialstärke, welches auf zwei gegenüberliegenden Seiten von je einer im Verhältnis zur Materialstärke sehr ausgedehnten Fläche begrenzt wird und mindestens 30,0 Massen-%, insbesondere 50,0 Massen-%, eines recycelten Kunststoffmaterials aufweist. Die Kunststoffrecyclingplatte weist insbesondere mindestens einen Copolyester auf. Die Kunststoffrecyclingplatte weist insbesondere recyceltes Glykol-modifiziertes Polyethylenterephthalat (PET-G) und/oder recyceltes, Glykol-modifiziertes Polycyclohexylendimethylenterephthalat (PCT-G) als mindestens ein recyceltes Kunststoffmaterial auf. Die Kunststoffrecyclingplatte ist insbesondere aus einem Kunststoffblend aufweisend zumindest 30,0 Massen-%, insbesondere 50,0 Massen-%, recyceltes PET-G und/oder PCT-G gefertigt. Bei einer opaken Kunststoffrecyclingplatte kann oder können PET-G und/oder PCT-G einen Anteil in einem Bereich von 40,0 bis 45,0 Massen-% aufweisen. Die Kunststoffrecyclingplatte weist insbesondere eine durchgehende Materialstärke auf. Die Kunststoffrecyclingplatte ist insbesondere einschalig und/oder einstückig. Die Kunststoffrecyclingplatte kann vollständig oder zumindest teilweise lichtdurchlässig sein. Ebenso kann die Kunststoffrecyclingplatte opak und damit lichtundurchlässig sein. Zudem kann die Kunststoffrecyclingplatte auch eingefärbt sein. Beispielsweise kann die Kunststoffrecyclingplatte eine Lichtplatte sein, welche in einem Dach einsetzbar oder als Dach verwendbar ist, um Tageslicht in einen daruntergelegenen Raum durchzulassen. Bei der Kunststoffrecyclingplatte kann es sich um eine ebene, unprofilierte Platte, eine teilweise profilierte Platte und/oder eine vollständig oder unterschiedlich profilierte Platte handeln. Eine profilierte Kunststoffrecyclingplatte kann insbesondere jegliche Profilform aufweisen. Bei einer profilierten Kunststoffrecyclingplatte kann es sich beispielsweise um eine Profilplatte im Sinus- oder Trapezprofil ohne oder mit eingeprägter Struktur, beispielsweise einer Waben- oder Froststruktur, handeln. Die Kunststoffrecyclingplatte kann zusätzlich beschichtet sein. Die Kunststoffrecyclingplatte kann eine Materialstärke in einem Bereich von 0,5 mm bis 4,0 mm, insbesondere von 0,7 mm bis 3,5 mm, bevorzugt von 0,7 mm bis 2,8 mm, aufweisen. Im Falle einer profilierten Kunststoffrecyclingplatte sind die Profilhöhe und die Profilbreite prinzipiell frei wählbar. Beispielsweise liegt die Profilhöhe in einem Bereich von 5,0 mm bis 51,0 mm und die Profilbreite in einem Bereich von 20,0 mm bis 250,0 mm. Insbesondere kommen Wellprofilformen mit 76,0 mm oder 94,0 mm Profilbreite und 18,0 mm oder 34,0 mm Profilhöhe und somit im Profil 76/18 oder 94/34 zur Anwendung. Für ein gutes Verlegen der Kunststoffrecyclingplatte durch den Anwender wird insbesondere eine Materialstärke von ≤ 3,0 mm aufgrund der dann noch gut handhabbaren Flächenmasse der Kunststoffrecyclingplatte bevorzugt. Prinzipiell ist herauszustellen, dass die Kunststoffrecyclingplatte als Copolyester alternativ oder ergänzend zu PET-G und/oder PCT-G auch andere Copolyesterarten, wie beispielsweise PCT-A (Polycyclohexylenterephthalat) aufweisen kann.

Unter "lichtdurchlässig" und "Lichtdurchlässigkeit" wird insbesondere die Fähigkeit der Kunststoffrecyclingplatte verstanden, Licht und/oder elektromagnetische Wellen durchzulassen. Die Lichtdurchlässigkeit bezieht sich insbesondere auf den für den Menschen sichtbaren Spektralbereich von 380 nm bis 780 nm. Die Lichtdurchlässigkeit kann beispielsweise in Prozent angegeben werden, wobei als Bezugsgröße eine Transmission von 100 % bei einer Öffnung frei von der Kunststoffrecyclingplatte verwendet wird. Angaben zur Lichtdurchlässigkeit sind insbesondere entsprechend der DIN EN ISO 13468-1:2019-10 unter Normallicht D65 als Testmethode bestimmt. Unter "transparent" werden insbesondere klare Materialien mit einer geringen Streuung verstanden.

Unter "opak" oder "lichtundurchlässig" wird insbesondere das Gegenteil von lichtdurchlässig und/oder transparent verstanden. Die "Opazität" ist insbesondere ein Maß für die Lichtundurchlässigkeit (Trübung) von transluzenten (streuend lichtdurchlässigen) Materialien).

Ein "Copolyester" ist ein Copolymer, welches durch Modifizierung eines Polyesters synthetisiert wird, wobei ein Polyester durch Polykondensation von Disäuren und Diolen entsteht. Unmodifiziertes Polyethylenterephthalat (PET) wird als einfacher Polyester insbesondere aus den Monomeren Terephthalsäure und Ethylenglykol gewonnen. Glykol-modifiziertes Polyethylenterephthalat" (PET-G, auch glykolmodifiziertes Polyethylenterephthalat) ist insbesondere ein Copolymer eines durch Polykondensation hergestellten thermoplastischen Kunststoffs aus der Familie der Polyester. PET-G ist insbesondere ein Copolymer des Polyesters PET. Grundsätzlich wird der Copolyester PET-G durch Polykondensation von Terephthalsäure mit Ethylenglykol (EG, auch kurz "Glykol") und Cyclohexandimethanol (CHDM) mit einem Überschuss der Ethylenglykol-Komponente hergestellt. Das Glykol-modifizierte PET zeichnet sich insbesondere durch seine hohe Transparenz und niedrige Viskosität aus.

Bei dem recycelten PET-G handelt es sich jedoch bereits um ein mindestens einmal hergestelltes, verarbeitetes und/oder verwendetes PET-G. Das recycelte PET-G liegt für die Fertigung der Kunststoffrecyclingplatte insbesondere als trockenes Mahlgut und/oder Regranulat vor. Bei dem recycelten PET-G handelt es sich somit nicht um ein unmodifiziertes PET, welches erst recycelt und dem anschließend Glykol, in welcher Art und Weise auch immer, beigemengt worden ist.

"Glykol-modifiziertes Polycyclohexylendimethylenterephthalat" (PCT-G, auch glykolmodifiziertes Polycyclohexylendimethylenterephthalat) ist insbesondere ein thermoplastischer Kunststoff und ein Copolyester. Unmodifiziertes PCT ist insbesondere durch Polykondensation aus Terephthalsäure und 1,4-Cyclohexandimethanol (CHDM) hergestellt. Zur Herstellung des Copolymers PCT-G erfolgt während der Polymerisation die Modifizierung mit einem Anteil Glykol als zweite Diolkomponente neben dem CHDM. PCT-G ist insbesondere temperatur- und hydrolysebeständiger als PET-G. PCT-G ist ebenfalls als transparentes Post-Industrial Recyclingmaterial verfügbar. Eine lichtdurchlässige Kunststoffrecyclingplatte aufweisend PCT-G kann beispielsweise in einer Wellenprofilform oder in einer Trapezprofilform mit einer Profilhöhe von 16 bis 18 mm und einer Profilbreite von 18 bis 20 mm ausgeführt sein.

Unter "Glykol-modifiziert" wird insbesondere verstanden, dass statt Glykol zumindest teilweise ein anderes Monomer und/oder Diol, insbesondere Cyclohexandimethanol, oder umgekehrt statt einem anderen Monomer und/oder Diol, wie CHDM, zumindest teilweise Glykol bei der Herstellung von PET-G und/oder PCT-G verwendet worden ist.

Unter "recycelt" wird insbesondere verstanden, dass ein Kunststoffmaterial nach der Fertigung einem Prozess der Rückgewinnung und/oder Wiedergewinnung zugeführt wurde. Unter recycelt werden insbesondere auch Abfallprodukte aufweisend PET-G, PCT-G oder ABS verstanden, welche direkt in einem industriellen Produktionsprozess anfallen und gar nicht erst an einen Verbraucher zur Nutzung gelangen. Als sogenanntes Post-Industrial-Rezyklat (PIR) wird insbesondere überschüssiges Kunststoffmaterial verstanden, welches in der Herstellung angefallen ist und noch nicht weiter benutzt und/oder verwendet worden ist. Gleichzeitig werden unter Recyclingmaterialien auch Endprodukte der konsumgüterproduzierenden Industrie verstanden, die nach der Nutzung insbesondere als Hausmüll anfallen, gesammelt, aufbereitet und als Rohstoff zur Herstellung neuer Produkte wiederverwendet werden, sogenanntes Post-Consumer-Rezyklat (PCR).

Ein "Antiblockingmittel" ist insbesondere ein Zusatzstoff, welcher das Gleiten einer fertig produzierten Kunststoffrecyclingplatte nach einem Längenschnitt über bereits darunter liegende Platte auf einer Palette fördert. Weiterhin verhindert das Antiblockingmittel ein zu starkes Haften der fertig produzierten Platten aneinander, wenn diese gestapelt aufeinander liegen oder längere Zeit mehrere Fertigpaletten übereinander gelagert werden. Dem Endkunden bietet das Antiblockingmittel den Vorteil, dass die Platten einfacher und ohne zu starke Haftung aneinander vom Stapel entnommen werden können. Das Antiblockingmittel kann insbesondere die Oberfläche der Kunststoffrecyclingplatte aufrauen, wodurch die Kohäsionskräfte zwischen zwei Platten verringert werden und folglich die Kontaktfläche beider Oberflächen verkleinert wird. Bei dem Antiblockingmittel kann es sich um trägergebundene Mikro- und/oder Nanopartikel eines mineralischen (z.B. Kieselsäure) und/oder organischen Stoffes handeln, welche oder welcher der Kunststoffrecyclingplatte an ihrer Oberfläche Rauigkeit verleiht. Die Kunststoffrecyclingplatte weist das Antiblockingmittel insbesondere in einem Bereich von 0,05 bis 0,5 Massen-%, bevorzugt von 0,07 bis 0,4 Massen-%, besonders bevorzugt von 0,1 bis 0,3 Massen-%, auf.

In einer weiteren Ausführungsform weist die Kunststoffrecyclingplatte das recycelte PET-G und/oder das recycelte PCT-G in einem Bereich von 35,0 bis 55,0 Massen-%, insbesondere von 40,0 bis 45,0 Massen-%, auf.

In einer weiteren Ausführungsform weist die Kunststoffrecyclingplatte zusätzlich recyceltes Acrylnitril-Butadien-Styrol-Copolymer auf, wobei das recycelte PET-G und/oder das recycelte PCT-G und das recycelte Acrylnitril-Butadien-Styrol-Copolymer sich, insbesondere als Kunststoffblend, bis zu 100,0 Massen-% ergänzen.

Auch bei Herstellern von Kunststoffteilen aus Acrylnitril-Butadien-Styrol-Copolymer (ABS) ist es häufig aus Qualitätsgründen nicht möglich, anfallende Produktionsabfälle selbst wieder direkt dem Fertigungsprozess zurückzuführen und diese in-line in der Fertigung wieder einzuarbeiten. Somit kann beispielsweise ABS-Regranulat von Automobilzulieferern für die Herstellung der Kunststoffrecyclingplatte verwendet werden.

Somit weist die Kunststoffrecyclingplatte als Hauptkomponente mindestens 30,0 Massen-%, insbesondere 50,0 Massen-%, recyceltes PET-G und/oder PCT-G und zusätzlich recyceltes ABS in möglichen Massenprozenten von maximal 69,95 % auf. Folglich kann die Kunststoffrecyclingplatte als zwei Kunststoffmaterial-Komponenten beispielsweise 50,0 Massen-% PET-G und/oder PCT-G und maximal 49,95 Massen-% ABS jeweils als recyceltes Material aufweisen. Bevorzugt weist das ABS jedoch bei einer opaken Kunststoffrecyclingplatte einen höheren Massenanteil als PET-G und/oder PCT-G auf. Das ABS-Regranulat in dem Blend aus Recyclingmaterialien führt vorteilhaft zur einer Erhöhung der Wärmeformbeständigkeit der lichtundurchlässigen Kunststoffrecyclingplatte auf mindestens 90 °C, insbesondere auf 95 °C. Hierbei wird gezielt eine Vicat-Erweichungstemperatur von durchschnittlich 92 - 98 °C von ABS im Vergleich zu PET-G mit einer niedrigeren Vicat-Erweichungstemperatur (VST/B50 / DIN EN ISO 306) von ca. 80 - 85 °C zur Verbesserung der Wärmeformbeständigkeit ausgenutzt. Die Wärmeformbeständigkeit von dunkel und/oder schwarz eingefärbten Kunststoffrecyclingplatten ist als anwendungstechnisches Produktmerkmal besonders wichtig, da die dunklen und/oder schwarzen Oberflächen beispielsweise eines Daches aus entsprechenden Kunststoffrecyclingprofilplatten sich bei intensiver Sonneneinstrahlung sehr stark, beispielsweise auf 80 °C oder höher, aufheizen, welches ansonsten bei zu geringer Wärmeformbeständigkeit des Kunststoffmaterials zu Verformungen der Profile und Undichtigkeiten des Daches führen kann. Durch einen Zusatz eines ausreichenden Massenanteil von ABS-Regranulat kann diesem Problem vorgebeugt werden. Zur Prüfung der Wärmeformbeständigkeit werden Teile einer entsprechenden Profilplatte lose auf einen Gitterrost in einen 90 °C heißen Umluftwärmeofen gelegt. Nach 20 min wird eine Änderung der Profilform der entnommenen Proben optisch oder durch Ausmessen beurteilt.

Dadurch, dass die Kunststoffrecyclingplatte neben recyceltem PET-G und/oder PCT-G zusätzlich recyceltes ABS enthält, wird insbesondere eine opake Kunststoffrecyclingplatte bereitgestellt. Bevorzugt weist die Kunststoffrecyclingplatte zusätzlich mindestens 20,0 Massen-%, bevorzugt größer 45,0 Massen-%, an recyceltem ABS auf. Beispielsweise kann eine solche opake Kunststoffrecyclingplatte 64,0 Massen-% recyceltes PET-G, 22,0 Massen-% recyceltes ABS, 11,5 Massen-% Schlagzähmodifier, 2,0 Massen-% eines, beispielsweise grünen, Farbstoffes, 0,1 Massen-% Antiblockingmittel und maximal 0,4 Massen-% Treibmittel aufweisen, wobei sich das Treibmittel während des Extrusionsprozesses zersetzt und das Kunststoffblend aufschäumt. Dementsprechend bezieht sich die Angabe des Treibmittels in Massen-% auf die eingesetzte Treibmitteldosierung, welche zum Aufschäumen benötigt wird.

Unter "Acrylnitril-Butadien-Styrol-Copolymer" (ABS) werden insbesondere thermoplastische Terpolymere verstanden, bei welchen an eine Polybutadien-basierte Hauptkette kovalent Seitenketten aus Styrol-Acrylnitril-Copolymer (SAN) angebunden sind. Zur Fertigung von neuem ABS variieren die Zusammensetzungen insbesondere in einem Bereich von 5 bis 30 Massen-% Butadien, 15 bis 35 Massen-% Acrylnitril und 40 bis 60 Massen-% Styrol. Allgemein wird unter ABS-Kunststoff auch ein Kunststoff aus Terpolymeren und/oder von Mischungen aus Acrylnitril, Butadien und Styrol hergestellten Polymeren und Copolymeren verstanden. ABS ist in Rohform insbesondere ein farbloser bis grauer Feststoff. Bei recycelten ABS handelt es sich insbesondere um ein wieder eingeschmolzenes und/oder granuliertes ABS. Die ABS-Recyclate sind insbesondere frei von Gummi- und/oder Metallpartikeln.

Um eine Profilplatte bereitzustellen, ist die Kunststoffrecyclingplatte zumindest teilweise profiliert.

Somit wird eine profilierte Kunststoffrecyclingplatte gefertigt aus einem recycelten Kunststoff oder aus einem Materialblend zweier oder dreier recycelter Kunststoffe bereitgestellt.

In einer weiteren Ausführungsform ist die Kunststoffrecyclingplatte zumindest teilweise geschäumt.

Durch Schäumen während der Fertigung kann die Flächenmasse der Kunststoffrecyclingplatte verringert werden. Um eine geschäumte Kunststoffrecyclingplatte zu erhalten, kann in der Fertigung der Kunststoffrecyclingplatte ein Treibmittel bei der Extrusion zugesetzt werden. Dadurch kann beispielsweise eine 2,5 mm dicke und geschäumte Kunststoffrecyclingplatte erhalten werden, welche im Vergleich zu einer kompakten, ungeschäumten Kunststoffrecyclingplatte aus demselben Materialblend zu etwa 15 bis 25 Prozent aufgeschäumt ist. Beispielsweise weist eine 2,2 mm starke, geschäumte Platte in einem Profil 94/34 bei einem Schäumungsgrad von 20 % eine niedrigere Flächenmasse von 2,45 kg/m² im Vergleich zu einer 2,2 mm starken, ungeschäumten Platte in dem gleichen Profil 94/34 mit einer Flächenmasse von 2,95 kg/m² auf.

Um die Eigenschaften der Kunststoffrecyclingplatte gezielt weiter einzustellen, kann die Kunststoffrecyclingplatte zusätzlich mindestens ein weiteres Additiv aufweisen, wobei das recycelte PET-G und/oder recycelte PCT-G und optional das recycelte ABS und das weitere Additiv oder zwei oder mehrere Additive sich jeweils zu 100,0 Massen-% ergänzen.

Ein "Additiv" ist insbesondere ein Hilfsstoff und/oder Zusatzstoff, welcher bei der Fertigung der Kunststoffrecyclingplatte in geringen Mengen zugesetzt wird, um bestimmte Eigenschaften der Kunststoffrecyclingplatte zu erreichen und/oder zu verbessern. Somit dient das mindestens eine Additiv insbesondere zum Schutz des recycelten Kunststoffes vor thermischem Abbau während dem Extrusionsprozess, einem besseren Handling, zur Stabilisierung gegen UV-induzierten Abbau während dem Gebrauch im Freien, zur Einstellung der erforderlichen mechanischen Festigkeit und/oder des zu erzielenden Flächengewichtes. Durch das mindestens eine Additiv wird die Modifikation und/oder Optimierung der Eigenschaften des Materialblends aus den recycelten Kunststoffen und folglich auch der Kunststoffrecyclingplatte ermöglicht.

Um die Eigenschaften gezielt einzustellen und/oder zu modifizieren, ist das weitere Additiv oder sind zwei oder mehrere Additive ein Schlagzähmodifier, ein Farbstoff, ein UV-Stabilisator, ein Treibmittel, ein Füllstoff und/oder ein Flammschutzmittel.

Diese unterschiedlichen Additive können wahlweise ebenso in verschiedenen Anteilen während der Fertigung der Kunststoffrecyclingplatte zugeführt werden und sind dementsprechend in unterschiedlichen Massenprozenten in der gefertigten Kunststoffrecyclingplatte vorhanden, um die gewünschten Eigenschaften der Kunststoffrecyclingplatte einzustellen und zu realisieren.

Ein "Schlagzähmodifier" ist insbesondere ein Zusatzstoff, welcher die mechanische Festigkeit und/oder Schlagzähigkeit des recycelten PET-G und/oder ABS verbessert. Bei dem Schlagzähmodifier kann es sich insbesondere um einen Acrylat-Modifier handeln. Der Acrylat-Modifier kann insbesondere transparent sein, sodass neben der mechanischen Beständigkeit auch die Transparenz des recycelten PET-G und/oder des Materialblends einstellbar ist. Ein Acrylat-Modifier weist insbesondere eine Acrylat-Basis mit einer Core-Shell-Struktur (Kern-Schale-Struktur) auf. Bevorzugt wird ein funktionalisierter Acryl-Schlagzähmodifier für PET-G eingesetzt, welcher ein Acryl-Copolymer aufweist und ein funktionelles, wetterfestes Kernschalen Gummi zur Verbesserung der Schlageigenschaften von Polymeren, insbesondere Polyestertypen, ist. Dieser Schlagzähmodifier für PET-G weist insbesondere im Kern ein acrylatisches Elastomer und somit eine Acryl-Kern-Schale-Struktur auf. Dieser Schlagzähmodifier geht insbesondere eine chemische Verbindung mit der Polyestermatrix ein. Bei einer Recyclingplatte aus Materialblend kann auch ein Modifier für opake Anwendungen eingesetzt werden. Zur Optimierung der mechanischen Eigenschaften der gefertigten Kunststoffrecyclingplatte wird im Extrusionsprozess zur Herstellung der Kunststoffrecyclingplatte der Schlagzähmodifier mit mindestens 5 Massen-%, insbesondere mit mindestens 10 bis 15 Massen-% und bevorzugt mit 7,5 oder 11 Massen-%, zugesetzt. Beispielsweise wird der Schlagzähmodifier mit 15 Massen-% für eine Anwendung bei 23 °C und mit 20 bis 30 Massen-% für eine Anwendung bei 0 °C eingesetzt. Bei einer reinen Recyclingplatte aus PET-G und/oder PCT-G wird insbesondere wegen der bereits sehr guten mechanischen Stabilität kein Modifier eingesetzt.

Bei einem "Farbstoff" handelt es sich insbesondere um jegliche Art von Farbstoff, welcher zum Einfärben des recycelten PET-G und/oder recycelten ABS und/oder des Materialblends geeignet ist. Bei einem Farbstoff handelt es sich insbesondere um ein Farbkonzentrat in einem Kunststoffträger (auch Masterbatch genannt). Der Farbstoff ist insbesondere ein intensiv wirksames Farbgranulat. Beispielsweise kann es sich bei dem Farbstoff um ein Farbgranulat auf Basis von Polyethylen-Trägern handeln. In Abhängigkeit von der gewünschten Farbe werden die Farbbatches mit mindestens 0,2 Massen-% und maximal mit 5,0 Massen-%, insbesondere mit 3,0 Massen-%, während der Extrusion zudosiert. Für die Herstellung der Kunststoffrecyclingplatte stehen insbesondere leicht getönte oder bunt gemischte Mahlgüter oder Regranulate aus PET-G und/oder meistens schwarze ABS-Regranulate zur Verfügung. Im Rahmen der durch die Farbe dieses Recyclingmaterials vorgegebenen Grenzen kann die Farbe der Kunststoffrecyclingplatte entsprechend mittels des Farbstoffes oder mehrerer Farbstoffe angepasst und/oder verändert werden. Neben einer kompletten schwarzen Einfärbung der Kunststoffrecyclingplatte bietet sich insbesondere durch Zudosieren von entsprechenden Farbbatches an der Extrusionsanlage auch die Fertigung von Kunststoffrecyclingplatten in dunkelgrünen, rotbraunen oder anthrazitfarbenen Farbvarianten an. Das Farbmasterbatch kann je nach Kundenwunsch gewechselt und/oder angepasst werden. Beispielsweise kann eine schwarze Platte mit bevorzugt 1,0 % Anteil schwarzem Masterbatch oder eine grüne Platte mit bevorzugt 1,6 % grünem Masterbatch (min. 1,0 % bis max. 3,0 %) oder eine rotbraune Platte mit bevorzugt 5,0 % rotem Masterbatch (min. 2,0 % bis max. 7,0 %) und bei Erfordernis mit 2,0 % zusätzlichem weißen Masterbatch (min. 1,0 % bis max. 3,0 %) hergestellt werden. Eine anthrazitfarbene Platte wird durch Zusatz von bevorzugt 0,4 % weißem Masterbatch erhalten (min. 0,2 % bis max. 1,0 %).

Ein "UV-Stabilisator" ist insbesondere ein Additiv, welches den Abbau der Polymerketten des recycelten Kunststoffes verlangsamen, jedoch nicht verhindern kann. Der UV-Stabilisator absorbiert insbesondere das UV-Licht und gibt dieses als Wärme ab. Der UV-Stabilisator ist insbesondere für eine bestimmte Wellenlänge oder einen bestimmten Wellenlängenbereich ausgelegt. Ein UV-Stabilisator kann insbesondere aus der Klasse der Hydroxyphenylbenzotriazole sein. Ein UV-Stabilisator wird insbesondere bei lichtdurchlässigen Platten aus recyceltem PET-G oder PCT-G verwendet, jedoch nicht bei opaken Platten aus Materialblend.

Ein "Treibmittel" ist insbesondere ein Zusatzstoff, welcher während der Fertigung in der Extrusionsanlage eingesetzt wird, um die Materialschmelze aus dem recycelten Kunststoffblend aufzuschäumen und dadurch das Gewicht des Extrudates zu reduzieren. Bei dem Treibmittel handelt es sich insbesondere um einen Gasbildner. Bei dem Treibmittel kann es sich um Gas und/oder ein endothermes Treibmittel handeln, bei dem durch Wärmezufuhr Gas gebildet wird, welches den Kunststoff und/oder die Materialschmelze aufschäumt. Ebenso kann es sich bei dem Treibmittel um ein exothermes Treibmittel handeln, bei welchem neben Gas Wärme freigesetzt wird. Prinzipiell sind alle handelsüblichen physikalischen und/oder chemischen Treibmittel bei der Fertigung der Kunststoffrecyclingplatte geeignet. Bevorzugt können insbesondere im Herstellungsprozess einer profilierten Kunststoffrecyclingplatte chemische Treibmittel eingesetzt werden. Dazu eignen sich insbesondere Granulate, die Azodicarbonamid enthalten. In Abhängigkeit von der zu erzielenden Flächenmasse und der Materialstärke der herzustellenden Kunststoffrecyclingplatte werden insbesondere 0,3 Massen-% bis 1,0 Massen-%, bevorzugt mindestens 0,5 Massen-% und besonders bevorzugt 0,75 Massen-% eines Treibmittelgranulates mit Azodicarbonamid während des Extrudierens zugesetzt.

"Füllstoffe" sind insbesondere unlösliche Zusatzstoffe, die zur Matrix des Materialblends zugegeben werden, um mechanische und/oder elektrische Eigenschaften und/oder Verarbeitungseigenschaften von Materialien des Materialblends und/oder -schmelze zu verändern. Bei dem Füllstoff kann es sich um eine mineralische und/oder nichtmineralische Komponente, wie beispielsweise Kaolin, Kreide und/oder Talkum, handeln. Der Füllstoff kann gleichzeitig auch als Flammschutzmittel wirken. Als Flammschutzmittel weist der Füllstoff insbesondere 10 bis 20 Massen-% in der Kunststoffrecyclingplatte auf.

Ein "Flammschutzmittel" ist insbesondere ein Zusatzstoff, welcher eine Ausbreitung eines Brandes einschränkt, verlangsamt oder verhindert. Ein Flammschutzmittel und/oder mehrere Flammschutzmittel können insbesondere vorteilhaft in der Kunststoffrecyclingplatte eingesetzt sein, da sowohl PET-G und/oder PCT-G als auch ABS und ein Schlagzähmodifier prinzipiell gut brennbar und nicht selbstverlöschend sind. Im Gegensatz dazu sind beispielsweise Hart-PVC-Profilplatten schwer entflammbar und selbstverlöschend und besitzen meist die Brandklasse B oder C**.**

Eine Ausführungsform der erfindungsgemäßen Kunststoffrecyclingplatte kann beispielsweise schwer entflammbar oder normal entflammbar ausgerüstet sein. Hierzu weist die Kunststoffrecyclingplatte beispielsweise eine Zusammensetzung von 58,0 Massen-% PET-G, 20 Massen-% ABS, 11 Massen-% Schlagzähmodifier, 0,25 Massen-% eines schwarzen Farbmasterbatches, 0,65 Massen-% Treibmittel, optional 0,1 Massen-% Antiblockingmittel und 10,0 Massen-% Flammschutzmittel auf. Zur Herstellung wird während des Herstellungsverfahrens das Flammschutzmittel insbesondere in das zu extrudierende Materialblend dosiert. Als Flammschutzmittel können beispielsweise phosphororganische, halogen- oder stickstoffhaltige Verbindungen und/oder Aluminiumhydroxid verwendet werden. Das Flammschutzmittel wird insbesondere in einem Bereich von 7 bis 15 Massen-%, bevorzugt 10 bis 12,5 Massen-%, eingesetzt. In der oben genannten Zusammensetzung der flammgeschützten Kunststoffrecyclingplatte kann zumindest eine normal entflammbare, nicht brennend abtropfende oder eine schwer entflammbare Kunststoffrecyclingplatte mit selbstverlöschenden Eigenschaften vorliegen. Alternativ oder ergänzend kann ein oben beschriebener Füllstoff als Flammschutzmittel eingesetzt werden.

Durch einen Zusatz von einem handelsüblichen Flammschutzmittel und/oder einem Füllstoff kann eine Verbesserung der brandhemmenden Eigenschaften und nach DIN EN 13501-1:2019-05 gegebenenfalls eine bessere Brandklasse der flammgeschützten Kunststoffrecyclingplatte erzielt werden. Zumindest wird durch Zusatz von einem Flammschutzmittel ein brennendes Abfallen verhindert.

Prinzipiell können die oben genannten einzelnen Additive, Zuschlags- und/oder Hilfsstoffe vorteilhaft jeweils einzeln während des Extrudierens separat zudosiert werden oder frei zusammen in einem Masterbatch kombiniert und eingesetzt werden.

Um eine nicht-transparente und/oder abschattende Kunststoffrecyclingplatte als Dach- und/oder Wandelement bereitzustellen, weist die Kunststoffrecyclingplatte mindestens 20,0 Massen-%, insbesondere mindestens 50,0 Massen-%, recyceltes Acrylnitril-Butadien-Styrol-Copolymer auf, sodass eine lichtundurchlässige Kunststoffrecyclingplatte vorliegt.

Auch in diesem Fall kann die lichtundurchlässige Kunststoffrecyclingplatte profiliert sein und beispielsweise bevorzugt eine Materialstärke in einem Bereich von 1,0 mm bis 3,0 mm, insbesondere von 1,5 mm bis 2,5 mm, aufweisen.

Um die Kunststoffrecyclingplatte als Lichtplatte für ein Dach und/oder eine Wand zu verwenden, weist die Kunststoffrecyclingplatte mindestens 95,0 Massen-%, bevorzugt mindestens 99,0 Massen-%, recyceltes PET-G und/oder PCT-G auf, sodass eine lichtdurchlässige Kunststoffrecyclingplatte vorliegt.

Somit kann die lichtdurchlässige Kunststoffrecyclingplatte beispielweise 99,6 Massen-% PET-G oder PCT-G, 0,3 Massen-% UV-Stabilisator und 0,1 Massen-% Antiblockingmittel aufweisen. Als profilierte lichtdurchlässige Kunststoffrecyclingplatte ist oder wird diese insbesondere mit Materialstärken in einem Bereich von 0,7 mm bis 2,5 mm hergestellt. Für eine Lichtplatte wird insbesondere klar-transparentes oder bläulich-transparentes (getöntes) PET-G- und/oder PCT-G-Recyclingmaterial verwendet.

Somit werden verschiedene erfindungsgemäße Kunststoffrecyclingplatten für unterschiedliche Anwendungen bereitgestellt.

Beispielsweise kann eine lichtdurchlässige Kunststoffrecyclingplatte folgende Komponenten in jeweiligen Bereichen in Massen-% aufweisen:

| **Komponente** | **min [Massen-%]** | **max [Massen-%]** | **bevorzugt [Massen-%]** |
|---|---|---|---|
| PET-G und/oder PCT-G | 99, 0 | 99,9 | 99, 6 |
| UV-Absorber | 0, 1 | 0, 8 | 0,3 |
| Antiblockingmittel | 0, 05 | 0,2 | 0, 1 |

Im Falle einer opaken geschäumten Kunststoffrecyclingplatte können die Komponenten die folgenden Bereiche in Massen-% aufweisen:

| **Komponente** | **min [Massen-%]** | **max [Massen-%]** | **bevorzugt [Massen-%]** |
|---|---|---|---|
| PET-G und/oder PCT-G | 30 | 60 | 41 |
| ABS-Regranulat | 20 | 60 | 50 |
| Schlagzähmodifier | 5,0 | 15 | 7,5 |
| Masterbatch, schwarz | 0,2 | 2, 0 | 1, 0 |
| Antiblockingmittel (optional) | 0,05 | 0,2 | 0, 1 |
| Treibmittel | 0,3 | 1, 0 | 0,5 |

Eine derartige Kunststoffrecyclingplatte kann in verschiedenen Ausführungen in Wellenprofilen wie 76/18, 94/94 oder auch 177/51 und dazu passenden Materialdicken zwischen 1,0 mm und 3,0 mm hergestellt werden oder sein.

In einer weiteren Ausführungsform kann eine opake, ungeschäumte und kompakte Kunststoffrecyclingplatte nachfolgende Komponenten mit Bereichen in Massenprozent aufweisen:

| **Komponente** | **min [Massen-%]** | **max [Massen-%]** | **bevorzugt [Massen-%]** |
|---|---|---|---|
| PET-G und/oder PCT-G | 95 | 99, 0 | 97,9 |
| Masterbatch, schwarz | 0,5 | 5,0 | 2,0 |
| Antiblockingmittel | 0,05 | 0,5 | 0,1 |

Eine derartige Kunststoffrecyclingplatte kann beispielweise als Grundmauerschutzplatte eingesetzt werden und hierzu im Sinusprofil 76/18 in einer Materialdicke von 2,5 mm (min 2,0 mm bis max. 3,0 mm) gefertigt sein, um einem Druck des Erdreiches an Gebäudewänden standzuhalten. Diese Plattenversion weist eine glatte Ober- und Unterseite auf und ist somit nicht strukturiert. Diese Kunststoffrecyclingplatte kann als Kunststoffmaterial nur aus PET-G und/der PCT-G Recyclingmaterial hergestellt sein, welches als buntes Mahlgut auch starke Farbunterschiede aufweisen kann und in einfacher Weise mit schwarzem Farbmasterbatch überfärbt wird.

In einem weiteren Aspekt der Erfindung wird die Aufgabe gelöst durch eine Polymermischung zum Herstellen einer Kunststoffrecyclingplatte, wobei die Polymermischung mindestens 30,0 Massen-%, insbesondere mindestens 50,0 Massen-%, recyceltes PET-G und/oder recyceltes PCT-G und optional recyceltes Acrylnitril-Butadien-Styrol-Copolymer, das Antiblockingmittel mit bis zu 0,5 Massenprozent und optional ein Additiv oder zwei oder mehrere Additive aufweist.

Somit wird eine Polymermischung bereitgestellt, mit welcher durch Extrusion über einen Extruder, insbesondere über einen konischen Doppelschneckenextruder, eine flache, ebene Materialbahn oder direkt eine weitestgehend ebene Kunststoffrecyclingplatte fertigbar ist.

In einem zusätzlichen Aspekt der Erfindung wird die Aufgabe gelöst durch ein Verfahren zum Herstellen einer Kunststoffrecyclingplatte, mit folgenden Schritten:
- Zuführen von mindestens 30,0 Massen-%, insbesondere mindestens 50,0 Massen-%, recyceltem PET-G und/oder recyceltem PCT-G und optional von recyceltem ABS und Zusetzen eines Antiblockingmittel mit bis zu 0,5 Massen-% als Additiv und optional Zusetzen von mindestens einem weiteren Additiv in einem Extruder, insbesondere in einem konischen, gegenläufig drehenden Doppelschneckenextruder, und Homogenisieren zu einem Materialblend,
- Aufschmelzen des Materialblends zu einer Materialschmelze,
- Extrudieren der Materialschmelze mittels einer Extrusionsdüse in eine flache Materialbahn, und
- zumindest Glätten und optional Prägen und/oder Umformen der flachen Materialbahn mittels mindestens Glättwalzen, Prägewalzen- und/oder mittels eines Profilwerkzeuges,
sodass eine zuvor beschriebene Kunststoffrecyclingplatte vorliegt.

PET-G und/oder PCT-G und optional ABS als trockene oder vorgetrocknete Recyclingmaterialien können in einem kontinuierlichen Prozess über Fördereinrichtungen als einzelne Komponenten dem Extruder zugeführt werden. Ebenso können entsprechend einer Vorgabe zur Zusammensetzung des Materialblends und der gefertigten Kunststoffrecyclingplatte das Antiblockingmittel und weitere Additive, wie UV-Stabilisator, Schlagzähmodifier, Farbmittelbatches, Treibmittel und/oder Flammschutzmittel, als Nebenkomponenten über geeignete Dosiereinrichtungen in den Extruder zugeführt werden. Beim Extrudieren erfolgt insbesondere ein Pressen der Materialschmelze durch eine Breitschlitzdüse als Extrusionsdüse. Nach dem Extrudieren wird die heiße Materialschmelze aus dem Recyclingmaterialblend sofort durch einen Walzenstuhl, insbesondere einen 3-Walzenstuhl, geführt, wobei wahlweise glatte Walzen und/oder strukturierte Walzen, je nach geforderter Oberfläche der Kunststoffrecyclingplatte, zum Einsatz kommen können. Hierbei wird bevorzugt zunächst ein Abkühlen und Glätten und/oder Prägen der ebenen Materialbahn über den 3-Walzenstuhl durchgeführt, bevor ein Umformen und/oder Profilieren mittels eines Profilwerkzeuges erfolgt. Die Walzen zum Glätten und/oder Prägen können regelbare Temperaturen in einem Bereich von 50 °C bis 70 °C aufweisen, welche an die Dicke der zu kühlenden Materialbahn anpassbar sind. Prinzipiell stehen verschiedene Strukturwalzen zur Verfügung, mit denen eine frostartige Oberfläche, eine wabenartige Oberfläche mit Prismen und/oder auch eine gerillte und/oder geriffelte Oberfläche in die Materialbahn aus Recyclingmaterial und/oder das plattenförmige Kunststoffrecyclinghalbzeug eingeprägt werden kann. Insbesondere zur Fertigung von lichtdurchlässigen Kunststoffrecyclingplatten wird der Walzenstuhl mit Glattwalzen ohne Prägestruktur verwendet. Jedoch ist auch eine einseitige Prägung über eine Strukturwalze für lichtdurchlässige Kunststoffrecyclingplatten mit einem Streulichteffekt möglich. Bevorzugt wird eine Kombination aus Froststruktur auf einer Oberseite und einer ebenen Struktur auf einer Unterseite der Materialbahn für opake und flammgeschützte Kunststoffrecyclingplatten entsprechend der oben angegebenen jeweiligen Zusammensetzung verwendet. Jedoch ist auch eine Kombination von zwei strukturgebenden Walzen denkbar, wodurch beide Seiten der Flachbahn eine Prägestruktur erhalten.

Die ebene, glatte und/oder geprägte Bahn aus Recyclingmaterialblend kann durch erneutes Erwärmen und eine Formgebung durch ein starres, gekühltes Profilwerkzeug zur profilierten Materialbahn umgeformt werden, welche anschließend durch einen Randbeschnitt auf die erforderliche Breite und über ein beheiztes Scherenmesser auf die gewünschte Länge geschnitten werden kann. Die so erhaltenen Kunststoffrecyclingplatten werden letztendlich versandbereit palettiert.

Somit wird ein Verfahren bereitgestellt, mit welchem in einfacher Weise eine Kunststoffrecyclingplatte herstellbar ist. Es ist besonders vorteilhaft, dass die Fertigung der Kunststoffrecyclingplatte aus dem Materialblend aufweisend recyceltes PET-G, PCT-G und/oder recyceltes ABS mittels eines konischen Doppelschneckenextruders und somit einer konventionellen Hart-PVC-Extrusionsanlage erfolgt. Hierbei wird das Blend aus den Recyclingmaterialien PET-G, PCT-G und/oder ABS und den jeweils benötigten Additiven in einem Doppelschneckenextruder mit konisch geschnittenen, gegenläufig drehenden Schnecken verarbeitet, welcher ursprünglich speziell für die Verarbeitung von pulverförmigen PVC-Dryblends konzipiert worden ist. Durch die gezielten, verschiedenen Anpassungen der Dosiertechnik und des Temperaturprofils an dem Hart-PVC-Extruder mit konischen Doppelschnecken und durch Anpassen der nachfolgenden zugehörigen Aggregate ist die Fertigung der erfindungsgemäßen Kunststoffrecyclingplatten ermöglicht.

In einer weiteren Ausgestaltungsform des Verfahrens wird oder werden beim Zuführen in den Extruder eine Temperatur in einem Bereich von 130 °C bis 160 °C, beim Homogenisieren und Aufschmelzen ein Temperaturbereich von 180 °C bis 230 °C, bei einem Austragen eine Temperatur zwischen 200 °C bis 220 °C, beim Extrudieren durch die Extrusionsdüse mit einem eingestellten Temperaturbereich von 190 °C bis 200 °C eine Temperatur der Materialschmelze in einem Bereich von 205 bis 215 °C verwendet.

Insbesondere in einem Extruder mit konischen Doppelschnecken erfolgt über die Einzugszone bei 130 °C bis 160 °C die Vorwärmung und in der Mischzone zwischen 180 °C und 230 °C die Homogenisierung und Plastifizierung des Recyclingmaterialblends. In dem sich anschließenden relativ kurzen Kompressionsbereich des Doppelschneckenextruders wird die Materialschmelze verdichtet, wobei in der nachfolgenden Entgasungszone bei Temperaturen zwischen 200 °C und 220 °C über eine Entgasungsöffnung durch angelegten Unterdruck Wasserdampf und weitere gasförmige Nebenprodukte abgezogen werden. In der letzten Zone des Doppelschneckenextruders mit speziellen Mischelementen, auch Austragszone genannt, werden bei circa 200 °C bis 220 °C Temperaturinhomogenitäten in der Schmelze verringert und ein gleichmäßiger Massedruck aufgebaut, um die Materialschmelze über einen Adapter mit 190 °C in einer Extrusionsdüse, insbesondere in einer Breitschlitzdüse, zu verteilen. Dadurch werden Schmelztemperaturen zwischen 205 °C und 215 °C erreicht. Die Temperaturen der Breitschlitzdüse werden zur optimalen Verteilung der Materialschmelze zwischen 190 °C und 200 °C eingestellt.

Prinzipiell ist herauszustellen, dass die Temperaturen bei der Extrusion und in den verschiedenen Zonen des Extruders je nach einzusetzenden, oft nicht einheitlichen Recyclingmaterial und des herzustellenden Plattentyps jeweils angepasst werden und dabei auch von den genannten Bereichen abweichen können. Diese Temperaturen können durchschnittlich in nachfolgenden Bereichen liegen:

| | Temperaturbereich [°C] |
|---|---|
| Extruderzone 1 (Einzugszone) | 125 - 160 |
| Extruderzone 2 (Mischzone) | 175 - 230 |
| Extruderzone 3 (Entgasungszone) | 210 - 240 |
| Extruderzone 4 (Austragszone) | 170 - 235 |
| Adapter | 180 - 190 |
| Düse | 190 - 205 |
| Massetemperatur | 205 - 215 |

Vor dem Zuführen kann ein Trocknen des recycelten PET-G und/oder des recycelten PCT-G und optional von recyceltem ABS durchgeführt werden.

Um den Feuchtigkeitsgehalt der Recyclingmaterialien zu verringern und/oder die Verarbeitbarkeit zu verbessern, wird das recycelte PET-G und/oder das recycelte PCT-G und optional auch das recycelte ABS als Mahlgut und/oder Regranulat vor dem Zuführen getrocknet. Das vorgelagerte Trocknen kann beispielsweise in separaten Industrietrocknern erfolgen. Das Trocknen wird bei recyceltem PET-G und PCT-G beispielsweise für mindestens zwei Stunden bei 65 °C bis 68 °C durchgeführt. Bei recyceltem ABS kann das Trocknen bei 80 °C für zwei bis drei Stunden erfolgen. Anschließend werden diese vorgetrockneten Recyclingmaterialien dem Extruder zugeführt.

In einer weiteren Ausgestaltungsform des Verfahrens wird oder werden das recycelte PET-G und/oder das recycelte PCT-G und/oder das recycelte ABS als Mahlgut und/oder Regranulat zugeführt.

Der jeweils recycelte Kunststoff kann als Mahlgut eine Partikelgröße in einem Bereich von 0,5 mm bis 15,0 **mm,** insbesondere von 1,0 mm bis 10,0 mm, aufweisen. Der jeweils recycelte Kunststoff kann als Regranulat eine Korngröße in einem Bereich von 2,0 mm bis 3,0 mm aufweisen. Das Regranulat kann beispielsweise eine Kugel- und/oder Zylinder-Form aufweisen.

Zur Herstellung einer lichtdurchlässigen Kunststoffrecyclingplatte mit oben angegebenen Verfahren wird beispielsweise ein Materialblend mit 99,6 Massen-% an PET-G Mahlgut, 0,3 Massen-% UV-Stabilisator und 0,1 Massen-% Antiblockingmittel verwendet. Für eine opake Kunststoffrecyclingplatte kann beispielsweise das Materialblend vor dem Aufschmelzen in dem Extruder eine Zusammensetzung aus 64,0 Massen-% PET-G Mahlgut, 22,0 Massen-% ABS Regranulat, 11,5 Massen-% Schlagzähmodifier, 2,0 Massen-% grünes Farbmasterbatch, 0,1 Massen-% Antiblockingmittel und 0,4 Massen-% Treibmittel aufweisen. Zum Fertigen einer zumindest nicht brennend abfallenden und aufgeschäumten Kunststoffrecyclingplatte kann das Materialblend eine Zusammensetzung von 58,0 Massen-% PET-G Mahlgut, 20,0 Massen-% ABS Regranulat, 11,0 Massen-% Schlagzähmodifier, 0,25 Massen-% schwarzes Farbmasterbatch, 0,65 Massen-% Treibmittel, 0,1 Massen-% Antiblockingmittel und 10,0 Prozent Flammschutzmittel aufweisen.

Zur Herstellung einer opaken Recyclingplatte kann ein Aufschäumen während des Extrudierens durchgeführt werden. Zum Aufschäumen wird insbesondere ein oben beschriebenes Treibmittel verwendet.

Im Weiteren wird die Erfindung anhand von Ausführungsbeispielen erläutert. Es zeigen
- Figur 1: eine stark schematische Schnittdarstellung einer Kunststoffrecyclingplatte mit Wellenprofil, und

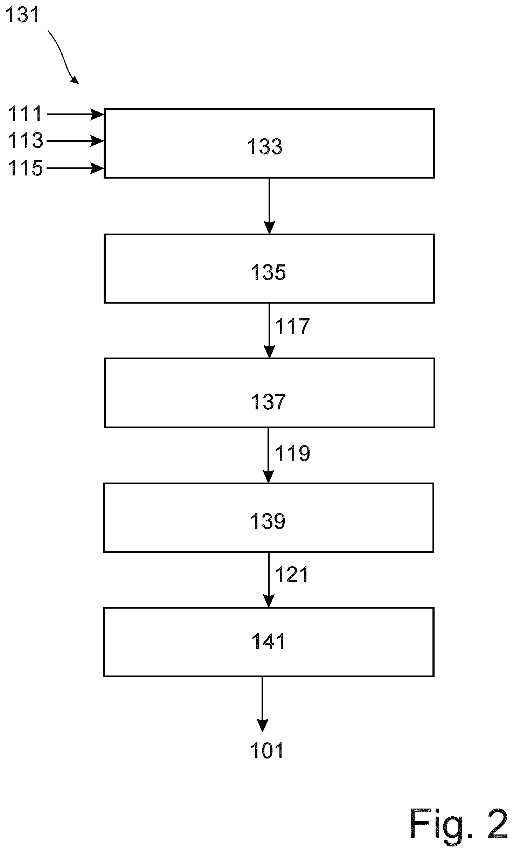

- Figur 2: eine schematische Darstellung von Verfahrensschritten eines Verfahrens zum Herstellen der Kunststoffrecyclingplatte.

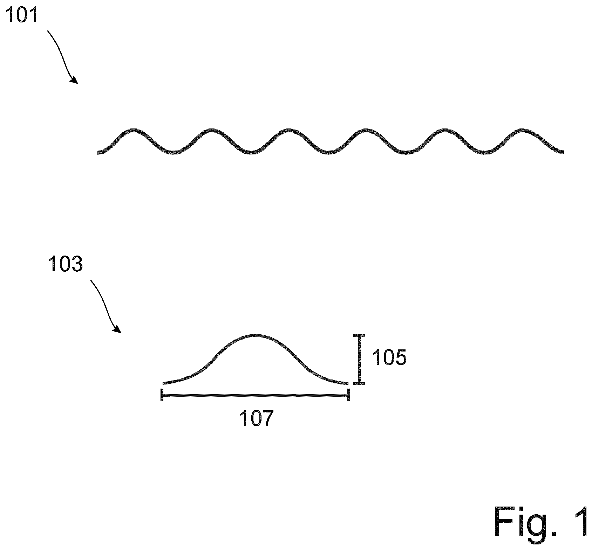

Eine Kunststoffrecyclingplatte 101 zum Erstellen eines Daches weist ein Wellenprofil 103 auf. Das Wellenprofil 103 weist eine Profilhöhe 105 von 34 mm und eine Profilbreite 107 von 94 mm auf (Figur 1). Die Kunststoffrecyclingplatte 101 ist opak und weist 64,0 Massen-% recyceltes PET-G und 22,0 Massen-% recyceltes ABS sowie 14,0 Prozent Additive (inklusive 0,1 Massen-% Antiblockingmittel) auf.

Die Kunststoffrecyclingplatte 101 ist in einem Verfahren 131 zum Herstellen mit folgenden Arbeitsschritten mittels eines konischen Doppelschneckenextruders gefertigt:

Dem Doppelschneckenextruder werden jeweils separat vorgetrocknetes PET-G Mahlgut 111 und vorgetrocknetes ABS Regranulat 113 zugeführt (Schritt 133). Das Zuführen erfolgt in einer Einzugszone des Doppelschneckenextruders bei 150 °C. Ebenso wird ein Zusetzen der Additive 115 über eine gleiche Einfüllöffnung in die Einzugszone durchgeführt. Ein Homogenisieren 135 erfolgt in einer Mischzone des Doppelschneckenextruders bei 180 °C. Das homogenisierte Materialblend 117 weist eine Zusammensetzung von 64,0 Massen-% PET-G Mahlgut 111, 22,0 Massen-% ABS Regranulat 113, 11,5 Massen-% Schlagzähmodifier, 2,0 Massen-% eines grünen Farbmasterbatches, 0,1 Massen-% Antiblockingmittel und 0,4 Massen-% Treibmittel auf.

Das homogenisierte Materialblend 117 wird im Folgenden bei 190 °C zu einer Materialschmelze 119 plastifiziert (Aufschmelzen 137) und in einer Kompressionszone verdichtet. Nach Fluss durch eine Entgasungszone bei 210 °C und nochmaligem Mischen der Materialschmelze 119 in einer Austragszone bei ca. 200°C wird die Materialschmelze 119 mittels einer Breitschlitzdüse des Doppelschneckenextruders extrudiert (Schritt 139), wodurch eine flache Materialbahn 121 vorliegt. Das Extrudieren 139 erfolgt bei einer Düsentemperatur von 190 °C.

Anschließend erfolgt zunächst ein Abkühlen, Glätten und/oder Prägen der Materialbahn 121 über gekühlte Walzen und nachfolgend eine nochmalige Erwärmung der Materialbahn 121 und Profilgebung (Wellenform) durch thermisches Umformen (Schritte 141). Nach Randbeschnitt und Zuschnitt auf eine zu produzierende Länge liegt die gefertigte, profilierte Kunststoffrecyclingplatte 101 vor. Die gefertigte Kunststoffrecyclingplatte 101 weist eine Materialstärke von 2,5 mm auf.

In einer Alternative wird eine Kunststoffrecyclingplatte 101 aufweisend PCT-G mit einem oben beschriebenen Verfahren 131 hergestellt, wobei ein PCT-G Mahlgut statt dem PET-G Mahlgut 111 eingesetzt und in der Mischzone des Doppelschneckenextruders eine durchschnittliche Temperatur von 220 °C verwendet wird. Das Aufschmelzen 137 wird bei 230 °C durchgeführt, in der Entgasungszone liegt eine Temperatur von 220 °C und in der Austragszone von 210 °C vor. Das Extrudieren 139 erfolgt bei einer Düsentemperatur von 200 °C. Ansonsten wird die Kunststoffrecyclingplatte 101 aufweisend PCT-G wie oben beschrieben gefertigt.

Somit wird eine Kunststoffrecyclingplatte 101 bereitgestellt, welche nachhaltig aus PET-G Mahlgut 111 oder PCT-G Mahlgut und ABS Regranulat 113 angepasst gefertigt ist und aufgrund ihrer eingestellten Eigenschaften als Dachelement mit einer hohen Standzeit einsetzbar ist.

### Bezugszeichenliste

- 101: Kunststoffrecyclingplatte
- 103: Wellenprofil
- 105: Profilhöhe
- 107: Profilbreite
- 111: PET-G Mahlgut
- 113: ABS Regranulat
- 115: Additive
- 117: Materialblend
- 119: Materialschmelze
- 121: flache Materialbahn
- 131: Verfahren zum Herstellen einer Kunststoffrecyclingplatte
- 133: Zuführen
- 135: Homogenisieren
- 137: Aufschmelzen
- 139: Extrudieren
- 141: Glätten, Prägen und Umformen

## Patentansprüche

1. Kunststoffrecyclingplatte (101) zur Verwendung als Dachelement und/oder Wandelement, wobei die Kunststoffrecyclingplatte (101) einen Copolyester aufweist, **dadurch gekennzeichnet, dass** die Kunststoffrecyclingplatte (101) als Copolyester mindestens 30,0 Massenprozent, insbesondere mindestens 50,0 Massenprozent, recyceltes, Glykol-modifiziertes Polyethylenterephthalat (111) und/oder recyceltes, Glykol-modifiziertes Polycyclohexylendimethylenterephthalat und als Additiv ein Antiblockingmittel (115) mit bis zu 0,5 Massenprozent aufweist.

2. Kunststoffrecyclingplatte (101) nach Anspruch 1, **dadurch gekennzeichnet, dass** die Kunststoffrecyclingplatte (101) das recycelte, Glykol-modifizierte Polyethylenterephthalat (111) und/oder das recycelte, Glykol-modifizierte Polycyclohexylendimethylenterephthalat in einem Bereich von 35,0 bis 55,0 Massenprozent, insbesondere von 40,0 bis 45,0 Massenprozent, aufweist.

3. Kunststoffrecyclingplatte (101) nach einem der vorherigen Ansprüche, **dadurch gekennzeichnet, dass** die Kunststoffrecyclingplatte (101) zusätzlich recyceltes Acrylnitril-Butadien-Styrol-Copolymer (113) aufweist, wobei das recycelte, Glykol-modifizierte Polyethylenterephthalat (111) und/oder das recycelte, Glykol-modifizierte Polycyclohexylendimethylenterephthalat und das recycelte Acrylnitril-Butadien-Styrol-Copolymer (113) sich bis zu 100,0 Massenprozent ergänzen.

4. Kunststoffrecyclingplatte (101) nach einem der vorherigen Ansprüche, **dadurch gekennzeichnet, dass** die Kunststoffrecyclingplatte (101) zumindest teilweise profiliert und/oder zumindest teilweise geschäumt ist.

5. Kunststoffrecyclingplatte (101) nach einem der vorherigen Ansprüche, **dadurch gekennzeichnet, dass** die Kunststoffrecyclingplatte (101) zusätzlich mindestens ein weiteres Additiv (115) aufweist, wobei das recycelte, Glykol-modifizierte Polyethylenterephthalat (111) und/oder das recycelte, Glykol-modifizierte Polycyclohexylendimethylenterephthalat und optional das recycelte Acrylnitril-Butadien-Styrol-Copolymer (113) und das weitere Additiv (115) oder zwei oder mehrere Additive sich jeweils zu 100,0 Massenprozent ergänzen.

6. Kunststoffrecyclingplatte (101) nach Anspruch 5, **dadurch gekennzeichnet, dass** das weitere Additiv oder zwei oder mehrere Additive ein Schlagzähmodifier, ein Farbstoff, ein UV-Stabilisator, ein Treibmittel, ein Füllstoff und/oder ein Flammschutzmittel ist oder sind.

7. Kunststoffrecyclingplatte (101) nach einem der Ansprüche 1 bis 6, **dadurch gekennzeichnet, dass** die Kunststoffrecyclingplatte (101) mindestens 20,0 Massenprozent, insbesondere mindestens 50,0 Massenprozent, recyceltes Acrylnitril-Butadien-Styrol-Copolymer (113) aufweist, sodass eine lichtundurchlässige Kunststoffrecyclingplatte (101) vorliegt.

8. Kunststoffrecyclingplatte (101) nach einem der vorherigen Ansprüche 1, 2, 5 oder 6, **dadurch gekennzeichnet, dass** die Kunststoffrecyclingplatte (101) mindestens 95,0 Massenprozent, bevorzugt mindestens 99,0 Massenprozent, recyceltes, Glykol-modifiziertes Polyethylenterephthalat (111) und/oder das recycelte, Glykol-modifizierte Polycyclohexylendimethylenterephthalat aufweist, sodass eine lichtdurchlässige Kunststoffrecyclingplatte (101) vorliegt.

9. Verfahren (131) zum Herstellen einer Kunststoffrecyclingplatte (101), mit folgenden Schritten:
- Zuführen (133) von mindestens 30,0 Massenprozent, insbesondere von mindestens 50,0 Massenprozent, recyceltem, Glykol-modifizierten Polyethylenterephthalat (111) und/oder recyceltem, Glykol-modifizierten Polycyclohexylendimethylenterephthalat und optional von recyceltem Acrylnitril-Butadien-Styrol-Copolymer (113) und Zusetzen eines Antiblockingmittel (115) mit bis zu 0,5 Massenprozent als Additiv und optional Zusetzen von mindestens einem weiteren Additiv (115) in einem Extruder, insbesondere in einem konischen Doppelschneckenextruder, und Homogenisieren (135) zu einem Materialblend (117),
- Aufschmelzen (137) des Materialblends (117) zu einer Materialschmelze (119),
- Extrudieren (139) der Materialschmelze (119) mittels einer Extrusionsdüse in eine flache Materialbahn (121), und
- zumindest Glätten und optional Prägen und/oder Umformen (141) der flachen Materialbahn (121) mittels Glättwalzen-, Prägewalzen und/oder mittels eines Profilwerkzeuges,
sodass eine Kunststoffrecyclingplatte (101) nach einem der Ansprüche 1 bis 8 vorliegt.

10. Verfahren (131) nach Anspruch 9, **dadurch gekennzeichnet, dass** beim Zuführen (133) in den Extruder eine Temperatur in einem Bereich von 130°C bis 160°C, beim Homogenisieren (135) und Aufschmelzen (137) ein Temperaturbereich von 180°C bis 230°C, nach einem Entgasen bei einem Austragen eine Temperatur zwischen 200°C bis 220°C, beim Extrudieren (139) durch die Extrusionsdüse mit einem eingestellten Temperaturbereich von 190°C bis 200°C eine Temperatur der Materialschmelze (119) in einem Bereich von 205° bis 215°C verwendet wird oder werden.

11. Verfahren (131) nach Anspruch 9 oder 10, **dadurch gekennzeichnet, dass** vor dem Zuführen (133) ein Trocknen des recycelten, Glykol-modifizierten Polyethylenterephthalates und/oder des recycelten, Glykol-modifizierten Polycyclohexylendimethylenterephthalat und optional von recyceltem Acrylnitril-Butadien-Styrol-Copolymer durchgeführt wird.

12. Verfahren (131) nach einem der Ansprüche 9 bis 11, **dadurch gekennzeichnet, dass** das recycelte, Glykol- modifizierte Polyethylenterephthalat (111) und/oder das recycelte, Glykol-modifizierte Polycyclohexylendimethylenterephthalat und/oder das recycelte Acrylnitril-Butadien-Styrol-Copolymer (113) als Mahlgut und/oder Regranulat zugeführt wird oder werden.

13. Verfahren (131) nach Anspruch 12, **dadurch gekennzeichnet, dass** das Mahlgut mit einer Partikelgröße in einem Bereich von 0,5 mm bis 15,0 mm, insbesondere von 1,0 mm bis 10,0 mm eingesetzt wird.

14. Verfahren (131) nach Anspruch 12 oder 13, **dadurch gekennzeichnet, dass** das Regranulat mit einer Partikelgröße in einem Bereich von 1,0 mm bis 4,0 mm, insbesondere von 2,0 mm bis 3,0 mm eingesetzt wird.

15. Verfahren (131) nach einem der vorherigen Ansprüche, **dadurch gekennzeichnet, dass** ein Aufschäumen während des Extrudieren (139) durchgeführt wird.
